(19) Europäisches Patentamt
European Patent Office
Office européen des brevets

(11) **EP 4 503 222 B1**

(12) **EUROPEAN PATENT SPECIFICATION**

(45) Date of publication and mention of the grant of the patent:
**19.08.2026 Bulletin 2026/34**

(21) Application number: **23218474.7**

(22) Date of filing: **20.12.2023**

(51) International Patent Classification (IPC):
***H01M 10/0525*** *(2010.01)* ***H01M 10/0567*** *(2010.01)*
***H01M 10/0569*** *(2010.01)*

(52) Cooperative Patent Classification (CPC):
**H01M 10/0525; H01M 10/0567;** H01M 10/0569;
H01M 2300/0025; Y02E 60/10

# (54) NON-AQUEOUS ELECTROLYTE AND LITHIUM-ION BATTERY

WASSERFREIER ELEKTROLYT UND LITHIUM-IONEN-BATTERIE

ÉLECTROLYTE NON AQUEUX ET BATTERIE AU LITHIUM-ION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **31.07.2023 CN 202310955694**

(43) Date of publication of application:
**05.02.2025 Bulletin 2025/06**

(73) Proprietors:
- **AESC Dynamics Technology (Jiangsu) Ltd.
214443 Wuxi City, Jiangsu Province (CN)**
- **AESC Dynamics Technology (Hubei) Ltd.
Shiyan, Hubei Province 442002 (CN)**
- **AESC Dynamics Technology (Ordos) Ltd.
Ordos, Inner Mongolia Autonomous Region 017200 (CN)**
- **AESC Dynamics Technology (Hebei) Ltd.
Cangzhou City, Hebei Province 061758 (CN)**
- **AESC Intelligent Innovation Dynamics Technology
(Shanghai) Ltd.
Shanghai 201315 (CN)**

(72) Inventors:
- **YU, Le
Pudong New Area Shanghai, 201315 (CN)**
- **WANG, Ziyuan
Pudong New Area Shanghai, 201315 (CN)**

(74) Representative: **Becker, Eberhard
Becker Kurig & Partner
Patentanwälte mbB
Bavariastraße 7
80336 München (DE)**

(56) References cited:
**EP-A1- 4 235 894** **EP-A1- 4 235 894**
**WO-A1-2023/115535** **WO-A1-2023/123186**
**US-A1- 2006 134 528** **US-A1- 2021 313 611**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

BACKGROUND

Technical Field

The present disclosure relates to the technical field of secondary batteries, and in particular to a non-aqueous electrolyte and a lithium-ion battery.

Description of Related Art

In recent years, with the popularity of cameras, mobile phones, watches, laptops, electric vehicles, etc., higher requirements are imposed on lithium-ion battery applications. Therefore, it is now a trend to develop battery products with small size, reduced weight, high energy density, long service life, etc.

Electrolyte is an important ingredient of lithium-ion batteries. Electrolyte serves the function of transporting lithium ions between the positive electrode and negative electrode. The safety of the battery, charge and discharge cycle performance, rate performance and battery charge and discharge capacity are all closely related to the electrochemical properties of the electrolyte. At present, the electrolyte commonly adopted in lithium-ion batteries is the electrolyte that uses lithium hexafluorophosphate ($LiPF_6$) as the electrolyte salt and a mixture of cyclic carbonates and chain carbonates as the organic solvent. However, such electrolyte has many defects. Especially the negative electrode interface protective layer (SEI film) of lithium-ion batteries is prone to rupture and repair under high voltage, and the electrochemical reaction between the electrolyte solvent and other additive ingredients is unavoidable, so there is a problem of gas production.
D1 (US 2006/134528A1) disclosed a battery including a cathode, an anode, and an electrolyte, in which a lithium metal is used as an anode active material, and the electrolyte contains a cyclic ester carbonate derivative having halogen atom and at least one from the group consisting of light metal salts.
D2 (US 2021/313611A1) disclosed a method in which the salt and other electrolyte components are already uniformly distributed throughout the cell because they are premixed within the electrode material. Upon addition of liquefied gas solvent, the salt and liquefied gas mix to create a liquefied gas electrolyte mixture that is immediately uniformly mixed throughout the entire cell including within the electrode and separator materials.
D3 (WO 2023/115535A1) disclosed an electrode assembly including a positive electrode, a negative electrode, and a separator located between the positive electrode and the negative electrode, where the positive electrode and the separator contain a solid electrolyte, a liquid electrolyte is present between the separator and the negative electrode, and a mass ratio of the solid electrolyte to the liquid electrolyte is 1:1 to 8:1, optionally 2:1 to 6:1.

In view of the above, there is an urgent need to develop new lithium-ion battery electrolytes to solve the above problems.

SUMMARY

**In** view of the above defects of the related art, the present disclosure provides a non-aqueous electrolyte and a lithium-ion battery to improve the gas production problem of the lithium-ion battery under high temperature.

**In** order to achieve the above purpose and other related purposes, the present disclosure provides a non-aqueous electrolyte, which includes a non-aqueous organic solvent, a lithium salt and an additive. The additive includes chlorinated ethylene carbonate and lithium difluorobis(oxalato)phosphate, wherein the chlorinated ethylene carbonate includes a compound represented by the following structural formula:

In the formula, R group is selected from a Cl group or a $CCl_3$ group.

In an example of the present disclosure, the mass percentage of the chlorinated ethylene carbonate accounts for 0.5% to 5% in content in the non-aqueous electrolyte.

In an example of the present disclosure, the mass percentage of the chlorinated ethylene carbonate accounts for

1% to 2.5% in content in the non-aqueous electrolyte.

According to the present invention, the mass percentage of the lithium difluorobis(oxalato)phosphate accounts for 0.5% to 2% in content in the non-aqueous electrolyte.

In an example of the present disclosure, the mass percentage of the lithium difluorobis(oxalato)phosphate accounts for 0.5% to 1% in content in the non-aqueous electrolyte.

In an example of the present disclosure, the conductivity of the non-aqueous electrolyte is 7.0 mS/cm to 12.5 mS/cm.

In an example of the present disclosure, the structural formula of the chlorinated ethylene carbonate is:

.

**In** an example of the present disclosure, the lithium salt includes lithium hexafluorophosphate and/or lithium bis(fluorosulfonyl)imide.

**In** an example of the present disclosure, the mass percentage of the lithium salt accounts for 8% to 20% in content in the non-aqueous electrolyte.

In an example of the present disclosure, the non-aqueous organic solvent includes cyclic carbonate and chain carbonate. The cyclic carbonate includes one or both of ethylene carbonate and propylene carbonate. The chain carbonate includes one or more of dimethyl carbonate, diethyl carbonate, and ethyl methyl carbonate.

Another aspect of the present disclosure provides a lithium-ion battery, which includes a positive electrode sheet, a negative electrode sheet, a separator and the above-mentioned non-aqueous electrolyte.

The present disclosure introduces chlorine-containing organic additives, which are chlorinated ethylene carbonate (ClEC) and lithium difluorobis(oxalato)phosphate (LiODFP), into the non-aqueous electrolyte. In the introduction process, the chlorinated ethylene carbonate and lithium difluorobis(oxalato)phosphate may form a double-layer structure with LiCl-LiF inorganic salt and vinylene carbonate oligomer on the surface of the negative electrode. The vinylene carbonate oligomer is partly an organic compound, which has high flexibility and a better coating effect at the interface with the negative electrode. The rigidity of LiF and the low solubility of LiCl in the inorganic salt may ensure the stability of the negative electrode protective layer (SEI film) after compounding, thereby improving the performance of the battery at high temperatures.

DESCRIPTION OF THE EMBODIMENTS

The following describes the implementation of the present disclosure through specific examples. Those skilled in the art can easily understand other advantages and effects of the present disclosure from the contents disclosed in this specification. The present disclosure can also be implemented or applied through other different specific implementations. Various details in this specification can also be modified or changed in various ways based on different viewpoints and applications without departing from the spirit of the present disclosure. It should be noted that, as long as there is no conflict between the embodiments, the following embodiments and the features in the embodiments may be combined with each other. It should also be understood that the terminology used in the embodiments of the present disclosure is for describing specific embodiments, but not for limiting the scope of the present disclosure. Test methods without specifying specific conditions in the following examples usually adopt conventional conditions or conditions recommended by various manufacturers.

For simplicity, the disclosure simply explicitly discloses some numerical ranges, and every point or individual value between the endpoints of the ranges is included within that range. Thus, each point or single value may serve as a lower or upper limit on its own in combination with any other point or single value or with other lower or upper limits to form a range not expressly recited.

The disclosure provides a non-aqueous electrolyte and a lithium-ion battery. The lithium-ion battery contains the non-aqueous electrolyte of the disclosure. Since chlorinated ethylene carbonate and lithium difluorobis(oxalato)phosphate are introduced into the non-aqueous electrolyte, a double-layer structure with LiCl-LiF inorganic salt and vinylene carbonate oligomer may be formed on the surface of the negative electrode, thereby improving the coating effect and stability of the negative electrode interface film, and enhancing the performance of lithium-ion batteries at high temperatures.

The above-mentioned non-aqueous electrolyte includes a non-aqueous organic solvent, a lithium salt and an

additive. The lithium salt and additive are dissolved in the non-aqueous organic solvent. The additive includes a chlorine-containing organic additive and lithium difluorobis(oxalato)phosphate. The chlorine-containing organic additive includes chlorinated ethylene carbonate, and the structural formula of chlorinated ethylene carbonate is as follows:

In the formula, R group is selected from a Cl group or a $CCl_3$ group. That is, chlorinated ethylene carbonate may be a compound represented by structural formula (1), a compound represented by structural formula (2), or a composition in which the compounds represented by structural formula (1) and structural formula (2) are mixed in any ratio:

Cl
(1),
CCl3
(2)

Since both structural formula (1) and structural formula (2) contain vinylene carbonate groups and chlorine-containing groups, in the operation of batteries, a double-layer structure with LiCl-LiF inorganic salt and vinylene carbonate oligomer may be formed on the surface of the negative electrode by mixing the structural formula (1) and structural formula (2) with lithium difluorobis(oxalato)phosphate, wherein the vinylene carbonate oligomer layer is an organic compound layer with high flexibility and good coating effect at the interface with the negative electrode. The rigidity of LiF and the low solubility of LiCl may ensure the stability of the negative electrode protective layer (SEI film) after compounding.

Preferably, chlorinated ethylene carbonate is a compound represented by structural formula (1).

Studies found that the compound represented by structural formula (1) combined with lithium difluorobis(oxalato) phosphate achieves a higher efficiency in forming LiCl-LiF composite inorganic salt and vinylene carbonate oligomer than the compound represented by structural formula (2) combined with lithium difluorobis(oxalato)phosphate. Therefore, preferably, chlorinated ethylene carbonate is a compound represented by structural formula (1).

**In** some embodiments, the mass percentage of chlorinated ethylene carbonate additive accounts for 0.5% to 5% in content in the non-aqueous electrolyte, such as 0.5%, 1%, 3% or 5%, etc., According to the present invention, the mass percentage of lithium difluorobis(oxalato)phosphate accounts for 0.5% to 2% in content in the non-aqueous electrolyte, such as 0.5%, 1.5% or 2%, etc., for example. Further, the mass percentage of chlorinated ethylene carbonate accounts for 1% to 2.5% in content in the non-aqueous electrolyte, such as 1.5%, 2%, 2.5%, etc., for example, the mass percentage of lithium difluorobis(oxalato)phosphate accounts for 0.5% to 1% in content in the non-aqueous electrolyte, such as 0.5%, 0.8% or 1.0%, etc., for example. By adjusting the ratio between chlorinated ethylene carbonate and lithium difluorobis(oxalato)phosphate, the conductivity of the electrolyte may be adjusted to 7.0 mS/cm to 12.5 mS/cm. There is no limitation to the conductivity of the electrolyte here, which may be adjusted within the above range, such as 7.0 mS/cm, 10 mS/cm or 12 mS/cm, etc.

It should be noted that both the chlorinated ethylene carbonate and lithium difluorobis(oxalato)phosphate of the

present disclosure may be purchased through general commercial channels or prepared using conventional preparation methods in this field.

The lithium salt in the non-aqueous electrolyte serves as an electrolyte salt. After the lithium salt is dissolved in the non-aqueous solvent, a large amount of active lithium ions is released, making the electrolyte have better conductivity. In order to obtain a better electrolyte, lithium salts normally adopt substances with the following characteristics: low dissociation energy and high solubility. Low dissociation energy may ensure that the electrolyte formed after the lithium salt is dissolved has high conductivity, thereby achieving high rate of the battery; high solubility ensures that there are enough lithium ions in the electrolyte for transmission as well as better stability, so that the lithium salt will not react with other ingredients when the battery operates at high voltage and high temperature. Good SEI film-forming performance may be achieved to ensure that the electrolyte will not be continuously consumed during subsequent cycles. Also, a good passivation effect may be obtained on aluminum current collectors and it is possible to prevent corrosion of aluminum foil under high voltage. Such electrolyte is cost-effective, and toxic-free and pollution-free.

**In** an example, the lithium salt is selected from lithium hexafluorophosphate ($LiPF_6$) and/or lithium bis(fluorosulfonyl)imide (LiFSI). That is, the lithium salt may be selected from lithium hexafluorophosphate alone, or may be selected from lithium bis(fluorosulfonyl)imide alone, or may be selected from a composition of lithium hexafluorophosphate and lithium bis(fluorosulfonyl)imide. In other examples, the lithium salt may also be selected from lithium tetrafluoroborate ($LiBF_4$), lithium bis(oxalate)borate (LiBOB), lithium difluoro(oxalato)borate (LiDFOB), lithium bis(trifluoromethanesulfonyl)imide (LiTFSI), or lithium difluorophosphate ($LiPF_2O_2$). Preferably, the lithium salt is selected from lithium hexafluorophosphate with better comprehensive performance, or lithium hexafluorophosphate serves as the main ingredient combined with other lithium salts added in a proper amount to take the advantage of the combination and improve the performance of the electrolyte through composition. The concentration of lithium salt may be set according to conventional selection in this field. In an example, the mass percentage of lithium salt accounts for 8% to 20% in content in the non-aqueous electrolyte, such as 8%, 12.5%, 15% or 20%, etc.

Non-aqueous organic solvents may be selected from conventional combinations for solvents in this field. In the present disclosure, the non-aqueous organic solvent includes cyclic carbonate and chain carbonate. The cyclic carbonate includes one or both of ethylene carbonate (EC) and propylene carbonate (PC). For example, the cyclic carbonate may be ethylene carbonate, propylene carbonate, or a mixture of ethylene carbonate and propylene carbonate mixed in any ratio. The chain carbonate includes one or more of dimethyl carbonate (DMC), diethyl carbonate (DEC), and ethyl methyl carbonate (EMC). That is, the chain carbonate may be any one of those listed above, such as dimethyl carbonate, diethyl carbonate, or ethyl methyl carbonate. The chain carbonate may also be a combination of any two or three of those listed above, such as a combination of dimethyl carbonate and diethyl carbonate, or a combination of diethyl carbonate and ethyl methyl carbonate, or a combination of dimethyl carbonate, diethyl carbonate and ethyl methyl carbonate. It should be noted that when the chain carbonate is a composition, there is no limitation to the ratio of the ingredients in the composition, and the ingredients may be mixed in any ratio.

The non-aqueous electrolyte of the present disclosure may be prepared according to conventional preparation methods. For example, first the non-aqueous organic solvent is mixed and stirred in a glove box, then the lithium salt is added, stirring is continued until the lithium salt is completely dissolved, and finally chlorinated ethylene carbonate and lithium difluorobis(oxalato)phosphate are added and stirred well. The content of nitrogen in the glove box is 99.999%, the actual content of oxygen in the glove box is 0.1 ppm, and the content of moisture is 0.1 ppm.

A second aspect of the present disclosure provides a lithium-ion battery. The battery includes a positive electrode sheet, a negative electrode sheet, a separator and an electrolyte. During the charging and discharging process of the battery, lithium ions are intercalated and deintercalated between the positive electrode sheet and the negative electrode sheet. The separator is disposed between the positive electrode sheet and the negative electrode sheet to serve the separation function. The electrolyte serves the function of propagating ions between the positive electrode sheet and the negative electrode sheet. The electrolyte is the non-aqueous electrolyte described above in the present disclosure. Since the non-aqueous electrolyte contains chlorinated ethylene carbonate and lithium difluorobis (oxalato) phosphate, the mixture of the two is able to form a double-layer structure with LiCl-LiF inorganic salt and vinylene carbonate oligomer on the surface of the negative electrode, thereby ensuring the stability of the negative electrode protective layer (SEI film), thus taking into account the performance at high temperatures and low temperatures.

Specifically, the positive electrode sheet includes a positive current collector and a positive electrode active substance layer disposed on at least one surface of the positive current collector, wherein the positive current collector may be made of materials with good electrical conductivity and mechanical strength, such as aluminum foil. The positive current collector has two surfaces opposite to each other in its own thickness direction, and the positive electrode active substance layer is disposed on any one or both of the two opposite surfaces of the positive current collector. The positive electrode active substance layer includes a positive electrode material, a positive electrode conductive agent and a positive electrode binder. There are no specific limitations to the specific types of positive electrode material, positive electrode conductive agent and positive electrode binder, which may be selected by those skilled in the art depending on actual needs.

In an example, the positive electrode material may be selected from ternary materials and lithium-containing phosphates. Specifically, the ternary materials include but are not limited to lithium nickel cobalt manganese oxide and lithium nickel cobalt manganese oxide doped with metal ions. Doping elements are, for example, any one or more selected from Zr, Ti, Mo, Al, Sr, W, Y, Ta, Nb, Mg, and Ba; lithium-containing phosphates include but are not limited to lithium manganese iron phosphate, lithium iron phosphate, lithium manganese phosphate and so on. The positive electrode binder is, for example, selected from polyvinylidene fluoride (PVDF) or polytetrafluoroethylene (PTFE), and so on. The positive electrode conductive agent is, for example, one selected from carbon black, acetylene black, graphene, carbon nanotubes, carbon nanofibers, etc., or a combination of two or more of the above mixed in any ratio.

The positive electrode sheet may be prepared according to methods known in the art. In an example, the positive electrode material, positive electrode conductive agent and positive electrode binder are dispersed in a solvent (such as N-methylpyrrolidone, NMP for short) to form a uniform positive electrode slurry. The positive electrode slurry is coated on the positive current collector and subjected to drying, cold pressing and other processes to obtain the positive electrode sheet. The ratio of various ingredients in the positive electrode slurry may be set with reference to the conventional ratio, and the disclosure provides no limitation thereto.

The negative electrode sheet includes a negative electrode current collector and a negative electrode active substance layer disposed on at least one surface of the negative electrode current collector. The negative electrode current collector may be made of materials with good electrical conductivity and mechanical strength, such as copper foil. The negative electrode current collector has two surfaces opposite to each other in its own thickness direction, and the negative electrode active substance layer is disposed on any one or both of the two opposite surfaces of the negative electrode current collector. The negative electrode active substance layer includes a negative electrode material, a negative electrode conductive agent, a negative electrode binder, and a thickening agent. There are no specific limitations to the specific types of negative electrode material, negative electrode conductive agent, and negative electrode binder. Materials known in the art that can be used in lithium-ion batteries may be adopted, and those skilled in the art may make selections depending on actual needs.

Preferably, the negative electrode material is a silicon-containing negative electrode material, such as elemental silicon, a silicon oxygen compound, a silicon carbon compound, etc., chlorinated ethylene carbonate (ClEC) and lithium difluorobis (oxalato)phosphate form a double-layer structure with LiCl-LiF composite inorganic salt and vinylene carbonate oligomer on the surface of the silicon negative electrode, thus achieving a better coating effect at the interface with the silicon negative electrode. The rigidity of LiF and the low solubility of LiCl may ensure the stability of the silicon negative electrode protective layer after compounding. The negative electrode conductive agent is selected from one of carbon black, acetylene black, graphene, carbon nanotubes, carbon nanofibers, etc. or a combination of two or more of the above mixed in any ratio. The negative electrode binder is selected from any one of polyacrylic acid (PAA), sodium polyacrylate (PAAS), polyacrylamide (PAM), polyvinyl alcohol (PVA), and styrene-butadiene rubber (SBR) or several compositions mixed in any ratio. The thickening agent is selected from carboxymethyl cellulose (CMC).

The negative electrode sheet may be prepared according to methods known in the art. For example, the negative electrode material, negative electrode binder, thickening agent and negative electrode conductive agent are dispersed in deionized water to form a uniform negative electrode slurry. The negative electrode slurry is coated on the negative electrode current collector and subjected to drying, cold pressing and other processes to obtain the negative electrode sheet. The ratio of various ingredients in the negative electrode slurry may be set with reference to the conventional ratio, and the disclosure provides no limitation thereto.

The separator is a conventional one adopted in the field, such as a porous PE film selected as the separator. The separator has a thickness of 9 $\mu$m to 18 $\mu$m, an air permeability of 180s/100mL to 380s/100mL, and a porosity of 30% to 50%.

The battery assembly is carried out according to the conventional method. When the preparation is completed, the negative electrode sheet, the separator, and the positive electrode sheet are stacked in order, and the stack is put into the aluminum-plastic film to obtain a dry battery cell, and the dry battery cell is baked at 80°C to remove water. The prepared electrolyte is injected into the dry battery cell and encapsulated to obtain the finished lithium-ion battery.

The technical solutions of the present disclosure are described in detail below through several specific examples and comparative examples. Unless otherwise stated, the raw materials and reagents used in the following examples are commercially available products, or can be prepared by conventional methods in the field, and the instruments used in the examples are all commercially available.

Example 1

The ethylene carbonate (EC), dimethyl carbonate (DMC) and ethyl methyl carbonate (EMC) were mixed evenly in a mass ratio of 3:5:2 to prepare a non-aqueous organic solvent; the dried lithium hexafluorophosphate ($LiPF_6$) was added into the non-aqueous organic solvent and mixed evenly, then the compound represented by the structural formula (1) and lithium difluorobis(oxalato)phosphate (LiODFP) were added and mixed evenly to prepare a non-aqueous

electrolyte. The mass percentage of lithium hexafluorophosphate accounts for 12.5% in content in the non-aqueous electrolyte, the mass percentage of the compound represented by the structural formula (1) accounts for 1% in content in the non-aqueous electrolyte, and the mass percentage of lithium difluorobis(oxalato)phosphate accounts for 0.7% in content in the non-aqueous electrolyte.

Example 2

The ethylene carbonate (EC), dimethyl carbonate (DMC) and ethyl methyl carbonate (EMC) were mixed evenly in a mass ratio of 3:5:2 to prepare a non-aqueous organic solvent; the dried lithium hexafluorophosphate ($LiPF_6$) was added into the non-aqueous organic solvent and mixed evenly, then the compound represented by the structural formula (2) and lithium difluorobis(oxalato)phosphate (LiODFP) were added and mixed evenly to prepare a non-aqueous electrolyte. The mass percentage of lithium hexafluorophosphate accounts for 12.5% in content in the non-aqueous electrolyte, the mass percentage of the compound represented by the structural formula (2) accounts for 1.5% in content in the non-aqueous electrolyte, and the mass percentage of lithium difluorobis(oxalato)phosphate accounts for 2% in content in the non-aqueous electrolyte.

Example 3

The ethylene carbonate (EC), dimethyl carbonate (DMC) and ethyl methyl carbonate (EMC) were mixed evenly in a mass ratio of 3:5:2 to prepare a non-aqueous organic solvent; the dried lithium hexafluorophosphate ($LiPF_6$) was added into the non-aqueous organic solvent and mixed evenly, then the compound represented by the structural formula (1) and lithium difluorobis(oxalato)phosphate (LiODFP) were added and mixed evenly to prepare a non-aqueous electrolyte. The mass percentage of lithium hexafluorophosphate accounts for 12.5% in content in the non-aqueous electrolyte, the mass percentage of the compound represented by the structural formula (1) accounts for 0.5% in content in the non-aqueous electrolyte, and the mass percentage of lithium difluorobis(oxalato)phosphate accounts for 0.7% in content in the non-aqueous electrolyte.

Example 4

The ethylene carbonate (EC), dimethyl carbonate (DMC) and ethyl methyl carbonate (EMC) were mixed evenly in a mass ratio of 3:5:2 to prepare a non-aqueous organic solvent; the dried lithium hexafluorophosphate ($LiPF_6$) was added into the non-aqueous organic solvent and mixed evenly, then the compound represented by the structural formula (1) and lithium difluorobis(oxalato)phosphate (LiODFP) were added and mixed evenly to prepare a non-aqueous electrolyte. The mass percentage of lithium hexafluorophosphate accounts for 12.5% in content in the non-aqueous electrolyte, the mass percentage of the compound represented by the structural formula (1) accounts for 2.5% in content in the non-aqueous electrolyte, and the mass percentage of lithium difluorobis(oxalato)phosphate accounts for 0.7% in content in the non-aqueous electrolyte.

Example 5

The ethylene carbonate (EC), dimethyl carbonate (DMC) and ethyl methyl carbonate (EMC) were mixed evenly in a mass ratio of 3:5:2 to prepare a non-aqueous organic solvent; the dried lithium hexafluorophosphate ($LiPF_6$) was added into the non-aqueous organic solvent and mixed evenly, then the compound represented by the structural formula (1) and lithium difluorobis(oxalato)phosphate (LiODFP) were added and mixed evenly to prepare a non-aqueous electrolyte. The mass percentage of lithium hexafluorophosphate accounts for 12.5% in content in the non-aqueous electrolyte, the mass percentage of the compound represented by the structural formula (1) accounts for 5% in content in the non-aqueous electrolyte, and the mass percentage of lithium difluorobis(oxalato)phosphate accounts for 0.7% in content in the non-aqueous electrolyte.

Example 6

The ethylene carbonate (EC), dimethyl carbonate (DMC) and ethyl methyl carbonate (EMC) were mixed evenly in a mass ratio of 3:5:2 to prepare a non-aqueous organic solvent; the dried lithium hexafluorophosphate ($LiPF_6$) was added into the non-aqueous organic solvent and mixed evenly, then the compound represented by the structural formula (1) and lithium difluorobis(oxalato)phosphate (LiODFP) were added and mixed evenly to prepare a non-aqueous electrolyte. The mass percentage of lithium hexafluorophosphate accounts for 12.5% in content in the non-aqueous electrolyte, the mass percentage of the compound represented by the structural formula (1) accounts for 1% in content in the non-aqueous electrolyte, and the mass percentage of lithium difluorobis(oxalato)phosphate accounts for 0.5% in

content in the non-aqueous electrolyte.

Example 7

The ethylene carbonate (EC), dimethyl carbonate (DMC) and ethyl methyl carbonate (EMC) were mixed evenly in a mass ratio of 3:5:2 to prepare a non-aqueous organic solvent; the dried lithium hexafluorophosphate ($LiPF_6$) was added into the non-aqueous organic solvent and mixed evenly, then the compound represented by the structural formula (1) and lithium difluorobis(oxalato)phosphate (LiODFP) were added and mixed evenly to prepare a non-aqueous electrolyte. The mass percentage of lithium hexafluorophosphate accounts for 12.5% in content in the non-aqueous electrolyte, the mass percentage of the compound represented by the structural formula (1) accounts for 1% in content in the non-aqueous electrolyte, and the mass percentage of lithium difluorobis(oxalato)phosphate accounts for 1.2% in content in the non-aqueous electrolyte.

Example 8

The ethylene carbonate (EC), dimethyl carbonate (DMC) and ethyl methyl carbonate (EMC) were mixed evenly in a mass ratio of 3:5:2 to prepare a non-aqueous organic solvent; the dried lithium hexafluorophosphate ($LiPF_6$) was added into the non-aqueous organic solvent and mixed evenly, then the compound represented by the structural formula (1) and lithium difluorobis(oxalato)phosphate (LiODFP) were added and mixed evenly to prepare a non-aqueous electrolyte. The mass percentage of lithium hexafluorophosphate accounts for 12.5% in content in the non-aqueous electrolyte, the mass percentage of the compound represented by the structural formula (1) accounts for 1% in content in the non-aqueous electrolyte, and the mass percentage of lithium difluorobis(oxalato)phosphate accounts for 2% in content in the non-aqueous electrolyte.

Comparative Example 1

The difference between this Comparative Example and Example 1 is that lithium difluorobis(oxalato)phosphate (LiODFP) was not added in this Comparative Example.

Comparative Example 2

The difference between this Comparative Example and Example 1 is that the compound represented by structural formula (1) was not added to this Comparative Example.

Comparative Example 3

The difference between this Comparative Example and Example 1 is that the compound represented by structural formula (1) and lithium difluorobis(oxalato)phosphate (LiODFP) were not added to this Comparative Example.

Comparative Example 4

The difference between this Comparative Example and Example 1 is that the amount of the compound represented by structural formula (1) added to this Comparative Example was 7%, and the amount of lithium difluorobis(oxalato)phosphate (LiODFP) added to this Comparative Example was 5%.

Comparative Example 5

The difference between this Comparative Example and Example 1 is that the amount of the compound represented by structural formula (1) added to this Comparative Example was 7%, and lithium difluorobis(oxalato) phosphate (LiODFP) was not added.

Comparative Example 6

The difference between this Comparative Example and Example 1 is that the compound represented by structural formula (1) was not added to this Comparative Example, and the amount of lithium difluorobis(oxalato) phosphate (LiODFP) added to this Comparative Example was 5%.

The electrolytes prepared in Examples 1 to 8 and Comparative Examples 1 to 6 were employed in lithium-ion batteries respectively to verify the efficacy of chlorinated ethylene carbonate and lithium difluorobis (oxalato) phosphate.

The preparation process of lithium-ion batteries was as follows:

(1) Positive electrode sheet: The positive electrode active substance selected from $LiNi_{0.9}Co_{0.05}Mn_{0.05}O_2$, the conductive agent selected from acetylene black, and the binder selected from polyvinylidene fluoride were dissolved in N-methylpyrrolidone (NMP) at a mass ratio of 95:3:2, the slurry was mixed evenly and applied on an aluminum foil, and subjected to drying, rolling and cutting to obtain a positive electrode sheet.
(2) Negative electrode sheet: The negative electrode active substance selected from a silicone compound, the conductive agent selected from acetylene black, the thickening agent selected from CMC-Li, and the binder selected from SBR were mixed in a mass ratio of 96.4: 1:1.2:1.4, then deionized water was added and mixed evenly and thoroughly to obtain the negative electrode slurry. Then deionized water was added to the slurry, and the slurry was mixed evenly and applied on a copper foil, and subjected to drying, rolling and cutting to obtain a negative electrode sheet.
(3) Separator: A porous PE film with a thickness of 11um was selected as the separator.
(4) Battery assembly: The prepared positive electrode sheet, the separator, and the negative electrode sheet were stacked in sequence, so that the separator is between the positive and negative electrode sheets to serve the separation function, and the stacked materials were put into the aluminum-plastic film to obtain the battery cell. The dry battery cell was baked at 80°C to remove water; the prepared electrolyte was injected into the dry battery cell and encapsulated to obtain the finished lithium-ion battery.

The lithium-ion batteries assembled with the electrolytes of Examples 1 to 8 and Comparative Examples 1 to 6 were subjected to performance tests. The test results are shown in Table 1. The test methods are as follows:

(1) Initial impedance DCR at 25°C:

The temperature of the thermostat was set to 25°C, and kept still for 10 minutes. Charging was performed with a constant current of 0.33C to 4.25V, then charging with a constant voltage of 4.25V to 0.05C, and kept still for 30 minutes. Thereafter, discharging was performed with a constant current of 0.33C to 2.5V; charging and discharging were performed at 0.33C for two cycles, and the final discharging capacity was recorded as $C_0$. After keeping still for 30 minutes, discharging was performed at 0.33C to 50%$C_0$, the SOC of battery cell was adjusted to 50%, and after keeping still for 1 hour, the standing terminal voltage was recorded as $V_1$. Discharging was performed with a constant current of $4C_0$ for 30 minutes, the terminal voltage was recorded as $V_2$ and current was recorded as I, and DCR=$(V_1-V_2)/I$ was calculated.

(2) Volume expansion rate after 30 days of storage at a high temperature of 60°C:

At 25°C, the lithium-ion battery was charged to 4.25 V at a constant current of 1 C, then charged at a constant voltage to a current of 0.05 C. The volume of the lithium-ion battery was tested and recorded as $X_0$. Then the fully charged battery was placed in an oven at 60°C for 30 days. The volume after storage was tested and recorded as $X_1$. The volume expansion rate relative to the lithium-ion battery before storage was calculated according to the following formula:

$$\text{Volume expansion rate (\%)} = (X_1-X_0)/X_0\times100\%.$$

Table 1: Performance of batteries prepared in Examples 1 to 8 and Comparative Examples 1 to 6

| Performance / Sample | Initial impedance DCR(mOhm) at 25°C | Volume expansion rate (%) after 30 days of storage at 60°C |
|---|---|---|
| Example 1 | 98.6 | 6.8 |
| Example 2 | 100.3 | 7.2 |
| Example 3 | 102.9 | 10.7 |
| Example 4 | 103.8 | 11.2 |
| Example 5 | 108.2 | 15.6 |
| Example 6 | 106.5 | 13.7 |
| Example 7 | 109.1 | 15.8 |
| Example 8 | 112.3 | 17.3 |
| Comparative Example 1 | 101.5 | 7.2 |
| Comparative Example 2 | 103.7 | 10.8 |
| Comparative Example 3 | 130.6 | 29.7 |
| Comparative Example 4 | 125.9 | 25.8 |
| Comparative Example 5 | 126.1 | 26.4 |
| Comparative Example 6 | 127.3 | 27.3 |

Comparing Example 1 with Example 2, it can be seen that the compound represented by structural formula (1) combined with LiODFP makes it possible to achieve a significantly better effect on initial impedance and gas storage performance than the compound represented by structural formula (2) combined with LiODFP, indicating that the compound represented by structural formula (1) has a better efficiency in forming the LiCl-LiF composite inorganic salt and vinylene carbonate oligomer.

Comparing Examples 1, 3 to 5, it can be seen that when LiODFP is added in a fixed amount, as the amount of added compound represented by structural formula (1) increases, the initial impedance first decreases and then increases, and the gas storage at high temperatures first decreases and then increases, indicating that the optimal amount of added compound represented by structural formula (1) is about 1%. In this way, it is possible to ensure that the formed SEI film is uniform and of appropriate thickness. When the amount of the compound represented by structural formula (1) is too little, less SEI film is formed and is insufficient to completely cover the negative electrode interface. With reference to the Comparative Examples 4 and 5 together, it can be seen that when the amount of added compound represented by structural formula (1) is too much, the formed SEI film will be thicker, which is unfavorable for transmission of lithium ions and stability at high temperatures.

Comparing Examples 1, 6 to 8, it can be seen that when the amount of the added compound represented by

structural formula (1) is fixed, as the amount of added LiODFP increases, the initial impedance first decreases and then increases as well, and the gas storage at high temperatures first decreases and then increases, indicating that the optimal amount of LiODFP is around 0.7%. When too much LiODFP is added (with reference to Comparative Examples 4 and 6) or too little, the stability of the SEI film will be poor, which adversely affects the performance of the battery cell.

Comparing Example 1, Comparative Example 1 and Comparative Example 2, when the compound represented by structural formula (1) and LiODFP are added to the electrolyte simultaneously, both the initial impedance and gas storage at high temperatures are lower as compared with the case where only one additive is added, which shows that it is possible to wrap the surface of the negative electrode with the double-layer structure with LiCl-LiF inorganic salt and vinylene carbonate oligomer only when two additives are present simultaneously, and it is impossible to form a corresponding structure with one additive alone and therefore the effect is poor.

The present disclosure introduces chlorinated ethylene carbonate and lithium difluorobis (oxalato) phosphate into the non-aqueous electrolyte to form a double-layer structure with LiCl-LiF inorganic salt and vinylene carbonate oligomer on the surface of the negative electrode, thereby improving the coating effect and stability of the negative electrode interface film, and enhancing the performance of lithium-ion batteries at high temperatures. Therefore, the present disclosure effectively overcomes some practical problems in the related art and has high utilization value and great significance in use.

## Claims

1. A non-aqueous electrolyte comprising: a non-aqueous organic solvent, a lithium salt and an additive, **characterized in that** the additive comprises a chlorinated ethylene carbonate and a lithium difluorobis(oxalato)phosphate, wherein the chlorinated ethylene carbonate comprises a compound represented by a following structural formula:

   wherein an R group is selected from a Cl group or a $CCl_3$ group,
   wherein a mass percentage of the lithium difluorobis(oxalato)phosphate accounts for 0.5% to 2% in content in the non-aqueous electrolyte.

2. The non-aqueous electrolyte according to claim 1, wherein a mass percentage of the chlorinated ethylene carbonate accounts for 0.5% to 5% in content in the non-aqueous electrolyte.

3. The non-aqueous electrolyte according to claim 2, wherein the mass percentage of the chlorinated ethylene carbonate accounts for 1% to 2.5% in content in the non-aqueous electrolyte.

4. The non-aqueous electrolyte according to claim 1, wherein the mass percentage of the lithium difluorobis(oxalato) phosphate accounts for 0.5% to 1% in content in the non-aqueous electrolyte.

5. The non-aqueous electrolyte according to claim 1, wherein a conductivity of the non-aqueous electrolyte is 7.0 mS/cm to 12.5 mS/cm.

6. The non-aqueous electrolyte according to claim 1, wherein a structural formula of the chlorinated ethylene carbonate is:

O
Cl
.

7. The non-aqueous electrolyte according to claim 1, wherein the lithium salt comprises lithium hexafluorophosphate and/or lithium bis(fluorosulfonyl)imide, and a mass percentage of the lithium salt accounts for 8% to 20% in content in the non-aqueous electrolyte.

8. The non-aqueous electrolyte according to claim 1, wherein the non-aqueous organic solvent comprises a cyclic carbonate and a chain carbonate, the cyclic carbonate comprises one or both of an ethylene carbonate and a propylene carbonate, and the chain carbonate comprises one or more of a dimethyl carbonate, a diethyl carbonate, and an ethyl methyl carbonate.

9. A lithium-ion battery comprising: a positive electrode sheet, a negative electrode sheet, a separator and the non-aqueous electrolyte according to any one of claims 1-8.

**Patentansprüche**

1. Nichtwässriger Elektrolyt, umfassend: ein nichtwässriges organisches Lösungsmittel, ein Lithiumsalz und ein Additiv, **dadurch gekennzeichnet, dass** das Additiv ein chloriertes Ethylencarbonat und ein Lithiumdifluorobis(oxalato) phosphat umfasst, wobei das chlorierte Ethylencarbonat eine Verbindung umfasst, die durch die folgende Strukturformel dargestellt ist:

O
R

wobei eine R-Gruppe aus einer Cl-Gruppe oder einer $CCl_3$-Gruppe ausgewählt ist,
wobei ein Massenprozentanteil des Lithiumdifluorobis(oxalato)phosphats 0,5 % bis 2 % an Gehalt in dem nichtwässrigen Elektrolyten ausmacht.

2. Nichtwässriger Elektrolyt nach Anspruch 1, wobei ein Massenprozentanteil des chlorierten Ethylencarbonats 0,5 % bis 5 % an Gehalt in dem nichtwässrigen Elektrolyten ausmacht.

3. Nichtwässriger Elektrolyt nach Anspruch 2, wobei der Massenprozentanteil des chlorierten Ethylencarbonats 1 % bis 2,5 % an Gehalt in dem nichtwässrigen Elektrolyten ausmacht.

4. Nichtwässriger Elektrolyt nach Anspruch 1, wobei der Massenprozentanteil des Lithiumdifluorobis(oxalato)phosphats 0,5 % bis 1 % an Gehalt in dem nichtwässrigen Elektrolyten ausmacht.

5. Nichtwässriger Elektrolyt nach Anspruch 1, wobei eine Leitfähigkeit des nichtwässrigen Elektrolyten 7,0 mS/cm bis 12,5 mS/cm beträgt.

6. Nichtwässriger Elektrolyt nach Anspruch 1, wobei eine Strukturformel des chlorierten Ethylencarbonats ist:

7. Nichtwässriger Elektrolyt nach Anspruch 1, wobei das Lithiumsalz Lithiumhexafluorophosphat und / oder Lithium-bis(fluorsulfonyl)imid umfasst und ein Massenprozentanteil des Lithiumsalzes 8 % bis 20 % an Gehalt in dem nichtwässrigen Elektrolyten ausmacht.

8. Nichtwässriger Elektrolyt nach Anspruch 1, wobei das nichtwässrige organische Lösungsmittel ein cyclisches Carbonat und ein Kettencarbonat umfasst, das cyclische Carbonat eines oder beide von einem Ethylencarbonat und einem Propylencarbonat umfasst und das Kettencarbonat eines oder mehrere von einem Dimethylcarbonat, einem Diethylcarbonat und einem Ethylmethylcarbonat umfasst.

9. Lithium-Ionen-Batterie, umfassend: ein Positivelektrodenblatt, ein Negativelektrodenblatt, einen Separator und den nichtwässrigen Elektrolyten nach einem der Ansprüche 1-8.

## Revendications

1. Électrolyte non aqueux comprenant : un solvant organique non aqueux, un sel de lithium et un additif, **caractérisé en ce que** l'additif comprend un carbonate d'éthylène chloré et un difluorobis(oxalato)phosphate de lithium, le carbonate d'éthylène chloré comprenant un composé représenté par la formule structurale suivante :

   dans laquelle un groupe R est choisi parmi un groupe Cl ou un groupe $CCl_3$, et
   dans lequel le pourcentage massique du difluorobis(oxalato)phosphate de lithium représente entre 0,5 % et 2 % de la masse totale de l'électrolyte non aqueux.

2. Électrolyte non aqueux selon la revendication 1, dans lequel le pourcentage massique du carbonate d'éthylène chloré représente entre 0,5 % et 5 % de la masse totale de l'électrolyte non aqueux.

3. Électrolyte non aqueux selon la revendication 2, dans lequel le pourcentage massique du carbonate d'éthylène chloré représente entre 1 % et 2,5 % de la masse totale de l'électrolyte non aqueux.

4. Électrolyte non aqueux selon la revendication 1, dans lequel le pourcentage massique du difluorobis(oxalato) phosphate de lithium représente entre 0,5 % et 1 % de la masse totale de l'électrolyte non aqueux.

5. Électrolyte non aqueux selon la revendication 1, dans lequel la conductivité de l'électrolyte non aqueux est comprise entre 7,0 mS/cm et 12,5 mS/cm.

6. Électrolyte non aqueux selon la revendication 1, dans lequel la formule structurale du carbonate d'éthylène chloré est :

7. Électrolyte non aqueux selon la revendication 1, dans lequel le sel de lithium comprend de l'hexafluorophosphate de lithium et/ou du bis(fluorosulfonyle)imide de lithium, et le pourcentage massique du sel de lithium représente entre 8 % et 20 % de la masse totale de l'électrolyte non aqueux.

8. Électrolyte non aqueux selon la revendication 1, dans lequel le solvant organique non aqueux comprend un carbonate cyclique et un carbonate linéaire, le carbonate cyclique comprend un carbonate d'éthylène et/ou un carbonate de propylène, et le carbonate linéaire comprend un ou plusieurs des composés suivants : le carbonate de diméthyle, le carbonate de diéthyle et le carbonate d'éthylméthyle.

9. Batterie lithium-ion comprenant : une feuille d'électrode positive, une feuille d'électrode négative, un séparateur et l'électrolyte non aqueux selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2006134528 A1
- US 2021313611 A1
- WO 2023115535 A1